(19) Europäisches Patentamt

European Patent Office

Office européen des brevets

(11) Veröffentlichungsnummer: **0 228 987**
**B1**

(12) **EUROPÄISCHE PATENTSCHRIFT**

(45) Veröffentlichungstag der Patentschrift:
30.05.90

(21) Anmeldenummer: 86730198.8

(22) Anmeldetag: 01.12.86

(51) Int. Cl.⁵: **H02B 11/02**

(54) Einrichtung zur Verriegelung eines verfahrbar angeordneten Schaltgerätes.

(30) Priorität: **11.12.85 DE 3544227**

(43) Veröffentlichungstag der Anmeldung:
**15.07.87 Patentblatt 87/29**

(45) Bekanntmachung des Hinweises auf die Patenterteilung:
**30.05.90 Patentblatt 90/22**

(84) Benannte Vertragsstaaten:
**DE FR GB IT SE**

(56) Entgegenhaltungen:
**US-A- 2 851 549**
**US-A- 4 112 269**

(73) Patentinhaber: **Siemens Aktiengesellschaft,
Wittelsbacherplatz 2, D-8000 München 2(DE)**

(72) Erfinder: **Bohnen, Peter, Ing. (grad.), Solmsstrasse 22,
D-1000 Berlin 61(DE)**

ACTORUM AG

## Beschreibung

Die Erfindung betrifft eine Einrichtung zur Verriegelung eines in einem Einschubrahmen verfahrbar angeordneten Schaltgerätes in mehreren Stellungen, insbesondere einer Betriebsstellung, einer Teststellung sowie einer Trennstellung, wobei eine mit diesen Stellungen entsprechenden Ausnehmungen versehene Kulisse mit einem zur Freigabe der Verschiebung des Schaltgerätes von Hand betätigbaren Sperrglied zusammenwirkt.

Eine Einrichtung dieser Art ist durch die US-A 4 112 269 bekannt geworden. Die Kulisse ist hierbei dem Schaltgerät zugeordnet, während das Sperrglied ein ortsfest gelagerter Hebel ist, der einen in die Ausnehmungen der Kulisse eingreifenden Zapfen besitzt. Dieser Hebel ist stets zu bedienen, wenn das Schaltgerät aus einer Stellung in die nächste verschoben werden soll. Die Kulisse und der Hebel befinden sich seitlich neben dem Schaltgerät in dem Raum zwischen dem Schaltgerät und einer Seitenwand des Einschubrahmens. Der Erfindung liegt die Aufgabe zugrunde, diesen Raum von Verriegelungsteilen frei zu machen, um dort andere für den Betrieb des Schaltgerätes wesentliche Teile unterbringen zu können, beispielsweise Anschlußvorrichtungen für Hilfsleitungen. Ferner soll die Einrichtung leicht bedienbar sein und einen unkomplizierten Aufbau besitzen.

Diese Aufgabe wird gemäß der Erfindung dadurch gelöst, daß die Kulisse in einer Bodenplatte des Einschubrahmens angeordnet ist und daß das Sperrglied als quer zur Richtung des Fahrweges verschiebbar geführter, an einer zum Verfahren des Schaltgerätes dienenden Traverse angebrachter Riegel ausgebildet ist. Die Einrichtung wird auf diese Weise in einem ansonsten nur teilweise benutzten Raum untergebracht, wobei die Einarbeitung der Kulisse in die Bodenplatte den Wegfall eines gesonderten Teiles bedeutet.

Bei der eingangs erwähnten, bekannten Einrichtung ist es erforderlich, zum Verfahren des Schaltgerätes das Sperrglied jeweils solange zu betätigen, bis es im Laufe des Fahrwegs von der Kulisse in der entriegelten Stellung gehalten wird. In dieser Hinsicht kann die Bedienung der Einrichtung im Rahmen der Erfindung dadurch erleichtert werden, daß an einem in die Kulisse eingreifenden Zapfen des Riegels ein Steuerhebel angelenkt ist, der um ein in einer ortsfesten Führungsbahn verschiebbares Gelenk durch einen Entsperrungsschieber sowie durch einen mit diesem zusammenwirkenden Hilfshebel in eine Entriegelungsstellung schwenkbar ist. Zur Verschiebung des Schaltgerätes wird hierbei im Unterschied zu der bekannten Einrichtung nicht das Sperrglied, sondern der Entsperrungsschieber betätigt. Dieser vermag in Verbindung mit dem Hilfshebel die Entriegelungsstellung zunächst ohne Fahrbewegung aufrecht zu erhalten. Wenn diese beginnt, können der Riegel, der Steuerhebel und der Ent sperrungsschieber vor dem Erreichen der nächsten vorgesehenen Stellung des Schaltgerätes durch Aufhebung der Selbsthemmung selbsttätig in ihrer Ausgangslage zurückgeführt werden.

Die genannten Teile können als im wesentlichen ebene, an der Bodenplatte des Einschubrahmens angeordnete und parallel zu dieser bewegbare Blechteile ausgebildet sein, wobei die Führungsbahn für den Steuerhebel durch ein Langloch in der Bodenplatte gebildet sein kann. Trotz der verbesserten Funktion der Einrichtung lassen sich somit die benötigten Teile einfach ausbilden und raumsparend unterbringen.

Die erwähnte Selbsthemmung des Entsperrungsschiebers und des Riegels ist auf unterschiedliche Weise erzielbar. Als vorteilhaft erweist es sich, den Hilfshebel als Winkelhebel mit zwei Schenkeln auszubilden, von denen der eine nahe seinem Ende ein Schwenklager aufweist, während der andere Schenkel eine mit dem Entsperrungsschieber zusammenwirkende Arbeitsfläche aufweist und einen in ein Langloch des Steuerhebels eingreifenden Zapfen besitzt. Da der Entsperrungsschieber gradlinig und der Hilfshebel kreisbogenförmig bewegbar ist, gibt es im Zusammenwirken des Entsperrungsschiebers und des Hilfshebels einen Punkt, an dem die Arbeitsfläche des Hilfshebels von dem Entsperrungsschieber abgleitet. Durch eine geeignete Ausbildung beider Teile in ihrem zusammenwirkenden Bereich ist zu erreichen, daß sich die Teile gegenseitig blockieren, bis beispielsweise der Hilfshebel von dem Entsperrungsschieber abgehoben und dieser hierdurch freigegeben wird. Auf besonders einfache Weise ist die Selbsthemmung dadurch zu erreichen, daß der Hilfshebel und der Entsperrungsschieber jeweils durch eine Feder im Sinne der Rückstellung des Riegels in die Sperrstellung bzw. des Entsperrungsschiebers in seine Ruhestellung vorgespannt sind. Hierbei entsteht die Selbsthemmung durch Reibung zwischen der Arbeitsfläche des Hilfshebels und dem Entsperrungsschieber nach dem erwähnten Abgleiten des Hilfshebels aufgrund seiner Schwenkbewegung.

Für die selbsttätige Rückstellung des Entsperrungsschiebers vor dem Erreichen der nächsten Stellung des Schaltgerätes kann durch eine geeignete Gestaltung der Kulisse gesorgt werden. Insbesondere kann hierzu die Kulisse zwischen den Aussparungen für die unterschiedlichen Stellungen des Schaltgerätes jeweils eine etwa dachförmige Steuerkurve besitzen wobei die Dachschrägen im Sinne einer weiteren Schwenkung des Steuerhebels im Sinne der Entriegelung angeordnet sind. Hierdurch wird erreicht, daß der Hilfshebel mit seiner Arbeitsfläche von dem Entsperrungsschieber abgehoben und hierdurch die Selbsthemmung beseitigt wird. Die Steuerkurven sind sowohl beim Einfahren wie beim Herausfahren des Schaltgerätes wirksam, so daß auch abwechselnde Fahrbewegungen ohne Störung der Funktion möglich sind.

Die vorstehend beschriebene Einrichtung hat nicht nur den Vorteil eines raumsparendes Aufbaus und einer für den Benutzer vorteilhaften Funktion, sondern gestattet es auch, in überraschend einfacher Weise eine präzise elektrische Stellungsmeldung für jede Stellung des Schaltgerätes zu bewirken. Dies kann dadurch geschehen, daß der Steuerhebel einen Fortsatz mit zur Beaufschlagung von Meldeschaltern dienenden Anschlagflächen besitzt. Diese vorteilhafte Ausnutzung des Steuerhebels beruht darauf, daß dieser bei der Verschiebung des Schaltgerätes die Kurvenform der Kulisse abtastet und somit eine Bewegung bereitstellt, die sowohl den Fahrweg des Schaltgerätes als auch eine überlagerte, quer zum Fahrweg gerichtete Bewegung enthält. Die Meldeschalter können hierbei gleichfalls in raumsparender Anordnung auf der Bodenplatte des Einschubrahmens in der Verschiebungsrichtung hintereinanderliegend angeordnet sein.

Wesentlich für diese Art der Betätigung der Meldeschalter ist der vollkommene Synchronismus mit den Fahrbewegungen des Schaltgerätes, der ohne Justierung zwangsläufig erhalten wird und durch normalen Verschleiß der Teile nicht beeinträchtigt werden kann. Ferner werden die Meldeschalter ohne einen zusätzlichen Mechanismus sprunghaft betätigt, so daß als Meldeschalter einfache Tastschalter ohne eigene Sprungfunktion verwendbar sind.

Es empfiehlt sich, jeder Stellung des Schaltgerätes einen Meldeschalter oder einen Satz von Meldeschaltern zuzuordnen, wobei mehrere einer Stellung des Schaltgerätes zugeordnete Meldeschalter übereinander angeordnet sein können. Zur Betätigung dieser Meldeschalter kann der Fortsatz des Steuerhebels zwei Anschlagflächen besitzen, deren Abstand größer als der Fahrweg des Schaltgerätes zwischen der Betriebsstellung und der Trennstellung ist. Auf diese Weise wird erreicht, daß jeweils nur eine der Anschlagflächen einen Meldeschalter bzw. Satz von Meldeschaltern betätigt, wobei der Abstand zwischen den Betätigungsorganen zweier benachbarter Meldeschalter größer sein kann als der Fahrweg zwischen zwei Stellungen des Schaltgerätes.

Die erwähnte Traverse kann nahe der Frontseite des Schaltgerätes in dem Einschubrahmen angeordnet und kann als bewegliches Widerlager einer zur Verschiebung des Schaltgerätes dienenden Gewindespindel ausgebildet sein, die eine mit einem Sperrzapfen des Riegels zusammenwirkende Zahnscheibe trägt. Der Riegel wirkt somit nicht nur mit der Kulisse zusammen, sondern sperrt gleichzeitig eine weitere Drehung der Gewindespindel, wenn der Zapfen in eine Ausnehmung der Kulisse einfällt, um Schäden durch unachtsame Bedienung zu vermeiden. Die Verwendung einer Gewindespindel in Verbindung mit einer Zahnscheibe und einem Riegelstück sind an sich bekannt (vgl. US-A 4 112 269).

Der Entsperrungsschieber kann zusätzlich als Sicherheitsorgan benutzt werden, indem an seinem bedienungsseitigen Endteil eine Öffnung angebracht wird. Im Zusammenhang damit ist in der Bodenplatte des Einschubrahmens gleichfalls eine Öffnung angebracht, die mit der Öffnung des Entsperrungsschiebers korrespondiert, wenn sich dieser in der Grundstellung befindet. Auf diese Weise läßt sich der Entsperrungsschieber und damit die gesamte Einrichtung durch ein Vorhängeschloß gegen eine unerwünschte Betätigung sichern.

Die vorstehend erläuterte Einrichtung eignet sich für Niederspannungs-Schaltanlagen, wobei das verfahrbare Schaltgerät beispielsweise ein Leistungsschalter oder eine Schaltgerätekombination sein kann. Auch für Anlagen im Mittelspannungsbereich ist die neue Einrichtung sinngemäß verwendbar.

Die Erfindung wird im folgenden anhand des in den Figuren dargestellten Ausführungsbeispieles näher erläutert.

Die Figur 1 zeigt in einer vereinfachten Darstellung einen Einschubrahmen zur Aufnahme eines Niederspannungs-Leistungsschalters.

Die Figuren 2 bis 9 zeigen jeweils in der Draufsicht eine Einrichtung zur Verriegelung eines Schaltgerätes in unterschiedlichen Stellungen bezüglich eines ortsfesten Trägers.

Die Figuren 10 und 11 zeigen eine Frontansicht der Einrichtung gemäß den Figuren 2 bis 9, wobei die Figur 10 die Teile in einer Stellung zeigt, die den Figuren 2, 5 und 8 zugeordnet ist, während die Stellung der Teile gemäß der Figur 11 den Figuren 3, 4, 7 und 9 zugehörig ist.

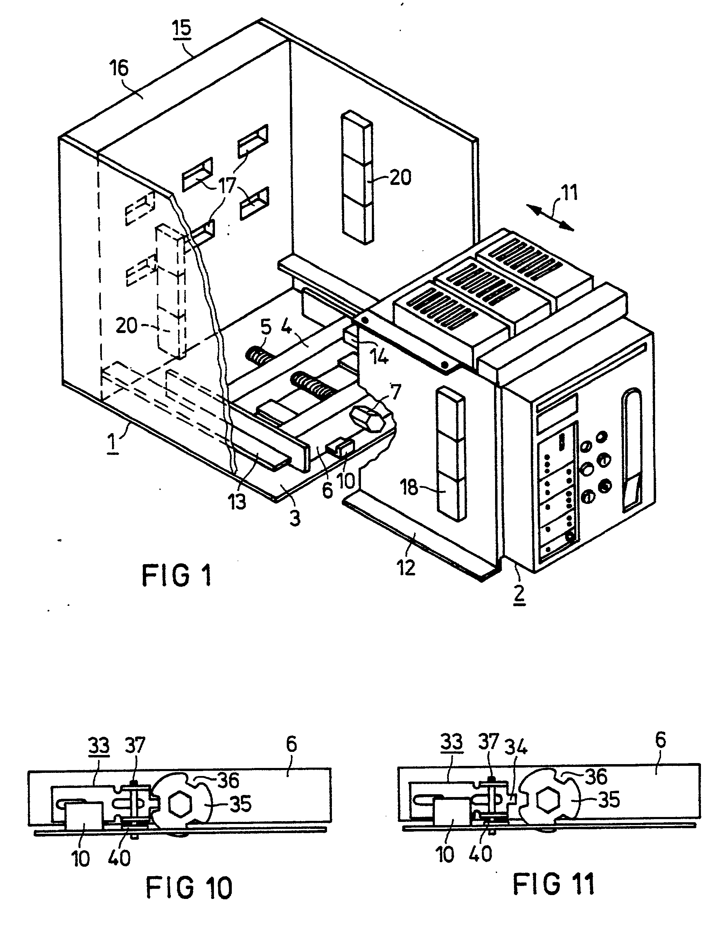

In der Figur 1 ist als Beispiel für die Anwendung der Erfindung ein Einschubrahmen 1 zur Aufnahme eines herausgezogen gezeigten Niederspannungs-Leistungsschalters 2 dargestellt. Eine solche Anordnung ist in der Regel Bestandteil einer Schaltanlage, in deren Zellen die Einschubrahmen 1 befestigt werden. Es sind nur diejenigen Teile gezeigt, die im Zusammenhang mit der Einrichtung nach der Erfindung von Interesse sind. Diese Teile sind insbesondere eine Bodenplatte 3 des Einschubrahmens 1, auf der sich ein ortsfestes Mutterstück 4 für eine Gewindespindel 5 sowie eine durch die Gewindespindel zu verschiebende Traverse 6 angeordnet ist. Die Gewindespindel 5 besitzt ein Bedienungskopfstück 7 in der Gestalt eines Sechskantes. Ferner ist ein Entsperrungsschieber 10 gezeigt, dessen Funktion noch erläutert wird. Die Traverse 6 und der Entsperrungsschieber 10 befinden sich nahe der Frontseite des Einschubträgers 1 und sind somit gut zugänglich. Die Bewegbarkeit der Traverse 6 mittels der Gewindespindel 5 ist durch einen Doppelpfeil 11 gekennzeichnet; der insgesamt zurückzulegende Fahrweg beträgt in Niederspannungsschaltanlagen nur wenige Zentimeter, da die auftretenden Spannungen größere Trennstrecken nicht erfordern. Soll die Einrichtung jedoch abweichend von dem Beispiel der Figur 1 für eine Schaltanlage im Mittelspannungsbereich eingesetzt werden, so sind dementsprechend größere Fahrwege zu berücksichtigen.

Der Niederspannungs-Leistungsschalter 2 kann einen beliebigen geeigneten Aufbau aufweisen. Für das Zusammenwirken mit der Einrichtung nach der Erfindung ist es nur erforderlich, daß an dem Gehäuse des Leistungsschalters Mittel zur Führung in dem Einschubrahmen 1 vorgesehen sind, z. B. abgewinkelte Fußleisten 12, die mit entsprechenden Gleitschienen 13 innerhalb des Einschubrahmens 1 zusammenwirken. Der Leistungsschalter 2 kann auch mit Rollen versehen sein, die mit einer ortsfesten Fahrschiene des Einschubrahmens zusammenwirken. An der Rückseite des Einschubrahmens 1 befindet sich eine Trennkontaktanordnung 15, die mit rückwärtigen Leiterstücken 14 des Leistungsschalters 2 zusammenwirkt. Im eingefahrenen Zustand des Leistungsschalters 2 greifen dessen Leiterstücke 14 durch Öffnungen 17 einer isolierenden Trennwand 16 und gelangen im Inneren der Trennkontaktanordnung 15 mit federnden Kontaktblöcken in Eingriff. Trennkontaktanordnungen sind in zahlreichen Ausführungen bekannt. Beispielsweise kann eine Ausführung mit Kontaktblöcken nach der US-A 4 486 636 benutzt werden.

Beim Einsetzen des Leistungsschalters in den Einschubrahmen 1 gelangt dieser durch eine geeignete Ausgestaltung in Verbindung mit der Traverse 6 oder einem hiermit verbundenen Teil und läßt sich daher nun durch Drehung der Gewindespindel 5 innerhalb des Einschubrahmens 1 verschieben. Die vollständig eingeschobene Stellung, bei der sich die Leiterstücke 14 durch die Öffnungen 17 der Isolierplatte 16 in die Trennkontaktanordnung 15 hinein erstrecken, wird im folgenden als Betriebsstellung bezeichnet. Bei der Bewegung nach vorn gelangt der Leistungsschalter 2 dann in eine Teststellung, in der die Leiterstücke 14 aus der Trennkontaktanordnung 15 herausgezogen sind, jedoch seitlich des Leistungsschalters 2 in der Figur 1 angedeutete Hilfsleitungskontakte 18 noch in leitender Verbindung mit ortsfesten Gegenkontakten 20 stehen. Auf diese Weise sind alle Funktionen des Leistungsschalters 2 probeweise durchführbar. Dies ist die sogenannte Teststellung. Bei weiterer Bewegung des Leistungsschalters 2 mittels der Gewindespindel 5 wird die Trennstellung erreicht, in der auch die Hilfsleitungskontakte 18 und 20 voneinander getrennt sind. Im folgenden wird eine an dem Einschubrahmen 1 angebrachte Einrichtung beschrieben, die dazu dient, den Leistungsschalter 2 in den beschriebenen Stellungen zu verriegeln und gleichzeitig diesen Stellungen zugeordnete Meldesignale abzugeben.

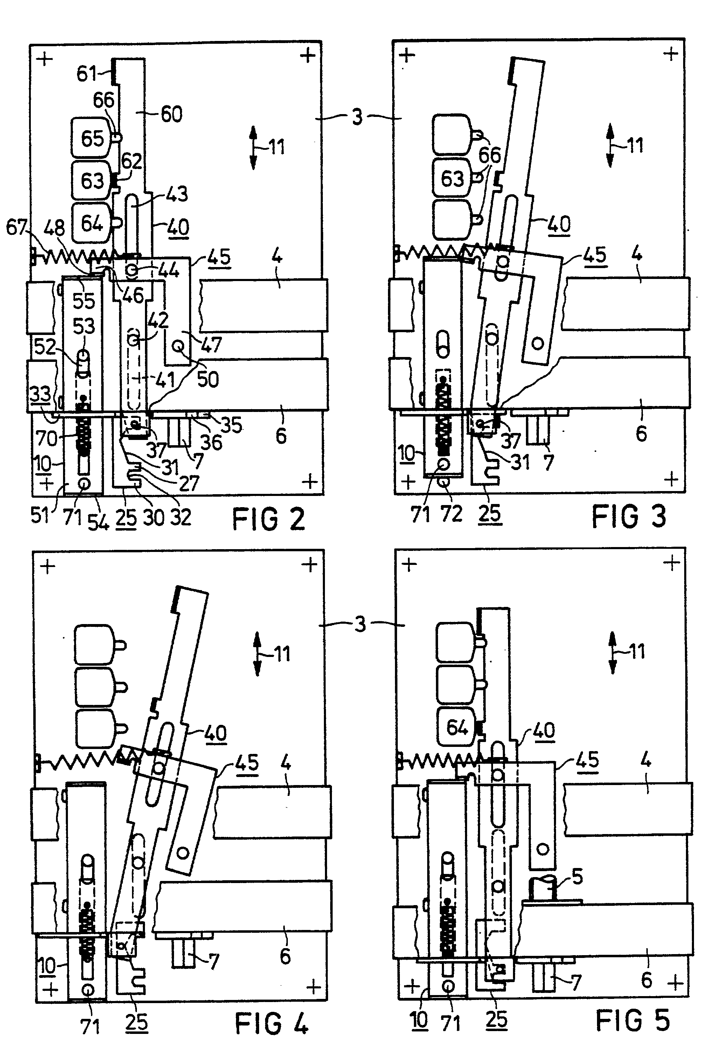

Die Figuren 2 bis 9 zeigen hierzu jeweils die Bodenplatte 3 des Einschubrahmens 1 sowie das Mutterstück 4, die Gewindespindel 5 und die Traverse 6. Ferner ist jeweils nahe der Vorderkante der Bodenplatte 3 eine kulissenartige Öffnung 25 mit drei Ausnehmungen 26, 27 und 30 gezeigt, von denen die Ausnehmung 26 der Betriebsstellung, die Ausnehmung 27 der Teststellung und die Ausnehmung 30 der Trennstellung zugeordnet ist. Zwischen jeweils zwei der Ausnehmungen befindet sich eine Steuerkurve 31 bzw. 32, welche die Form einer Dachschräge besitzt. Der Zweck dieser Gestaltung wird noch erklärt. In der Figur 8 ist der Steuerhebel 40 ausgebrochen dargestellt, um die Ausnehmung 26 der Kulisse 25 und die angrenzende Steuerkurve 31 sichtbar zu machen.

An der Frontseite der Traverse 6 ist ein Riegel 33 verschiebbar geführt. Die Verschiebungsrichtung des Riegels 33 steht somit quer zu der Verschiebungsrichtung des Leistungsschalters 2, die in den Figuren 2 bis 9 entsprechend der Figur 1 mit einem Doppelpfeil 11 bezeichnet ist. Wie insbesondere die Figuren 10 und 11 zeigen, besitzt der Riegel 33 einen Sperrzapfen 34, der zum Eingreifen in Aussparungen 36 einer Zahnscheibe 35 vorgesehen ist, die sich am frontseitigen Ende der Gewindespindel 5 anschließend an das Bedienungskopfstück 7 befindet. Ferner trägt der Riegel 33 einen in die Kulisse 25 der Bodenplatte 3 eingreifenden Führungsstift 37, an dem das vordere Ende eines Steuerhebels 40 angelenkt ist.

Der Steuerhebel 40 erstreckt sich in seiner Ruhestellung gemäß der Figur 2 etwa rechtwinklig zur Vorderkante der Bodenplatte 3, d. h. in der Tiefenerstreckung des Einschubrahmens 1 entsprechend dem Pfeil 11. Zur Führung des Steuerhebels 40 ist in der Bodenplatte 3 ein sich gleichfalls in der Tiefenerstreckung des Einschubrahmens 1 erstreckendes Langloch 41 angebracht, das in den Figuren 2 bis 9 überwiegend von dem Steuerhebel 40 verdeckt ist. In dieses Langloch greift ein Lagerstift 42 des Steuerhebels 40 ein, so daß der Steuerhebel 40 um diesen Stift geschwenkt werden kann. Wie man erkennt, ist eine solche Schwenkung des Steuerhebels 40 aufgrund der Verbindung durch den Führungsstift 37 mit einer Verschiebung des Riegels 33 verbunden.

Der Steuerhebel 40 ist seinerseits mit einem sich in der Längsrichtung des Steuerhebels erstreckenden Langloch 43 versehen, der zum Eingriff eines Lenkstiftes 44 eines winkelförmigen Hilfshebels 45 vorgesehen ist.

Der Hilfshebel 45 besitzt zwei rechtwinklig zueinander stehende Schenkel 46 und 47. Dabei befindet sich der Lenkstift 44 an dem Schenkel 46, der sich in der Grundstellung gemäß den Figuren 2, 5 und 9 parallel zu der Traverse 6 und damit quer zu der Richtung des Fahrweges (Pfeil 11) erstreckt.

Der Schenkel 46 besitzt ferner einen hochgebogenen Lappen 49 als Widerlager einer am Rand der Bodenplatte 3 eingehängten Rückstellfeder 67.

Der Schenkel 47 des Hilfshebels 45 ist dagegen in der genannten Grundstellung in der Verschiebungsrichtung ausgerichtet. Dieser Schenkel ist nahe seinem Ende durch einen Bolzen 50 schwenkbar gelagert, der in der Draufsicht gemäß den Figuren 2 bis 9 etwa unterhalb der Längsachse der Gewindespindel 5 an der Bodenplatte 3 angebracht ist.

Ein weiterer Bestandteil der Einrichtung ist der schon erwähnte Entsperrungsschieber 10, der gleichfalls auf der Bodenplatte 3 in der Richtung des Pfeiles 11 mittels eines Langloches 52 und eines ortsfesten Bolzens 53 verschiebbar geführt ist. An seinem bedienungsseitigen Endteil 51 besitzt der Entsperungsschieber 10 eine in der Grundstellung etwa bündig mit der Vorderkante der Bodenplatte 3 stehende Abwinklung 54. An seinem hinteren Ende ist der Entsperrungsschieber 10 mit einer weiteren Abwinklung 55 versehen, die in einer noch zu beschreibenden Weise mit einer Arbeitsfläche 48 am Ende des Schenkels 46 des Hilfshebels 45 zusammenwirkt.

Die vorstehend beschriebenen Teile, d. h. im wesentlichen die Kulisse 25, der Riegel 33, der Steuerhebel 40, der Hilfshebel 45 und der Entsperrungsschieber 10 bewirken in einer noch zu beschreibenden Weise die Verriegelung des Leistungsschalters 2 gemäß der Figur 1 in dem Einschubrahmen 1 in den erwähnten Stellungen sowie jeweils die Freigabe vor einer erneuten Verschiebung. Darüberhinaus werden in Abhängigkeit von diesen Stellungen Meldeschalter betätigt, wie dies gleichfalls die Figuren 2 bis 9 zeigen. Hierzu ist der Steuerhebel 40 mit einer rückseitigen Verlängerung 60 versehen, an der zwei Anschlagflächen 61 und 62 zur Betätigung von drei Meldeschaltern 63, 64 und 65 vorgesehen sind, die in der genannten Reihenfolge der Betriebsstellung, der Teststellung und der Trennstellung zugeordnet sind. Die Meldeschalter sind in der Richtung des Fahrweges (Pfeil 11) hintereinanderliegend auf der Bodenplatte 3 angeordnet und nehmen daher nur wenig Raum in Anspruch. Falls erforderlich, können jeweils zwei oder mehrere Meldeschalter übereinander montiert sein, so daß für jede Stellung des Leistungsschalters eine entsprechende Anzahl von Meldestromkreisen zur Verfügung steht. Die Meldeschalter können handelsübliche Bauelemente sein, wie sie beispielsweise als Endtaster gebräuchlich sind. Als Betätigungsorgan besitzen die Meldeschalter einheitlich einen Stößel 66, der geradlinig verschiebbar ist und hierbei im Inneren des Meldeschalters Kontakte betätigt. Die Kraft zur Betätigung der Meldeschalter wird durch die Rückstellfeder 67 aufgebracht, die über den Hilfshebel 45 mittels des Lenkstiftes 44 auf den Steuerhebel 40 wirkt. Eine weitere Rückstellfeder 70 sorgt dafür, daß der Entsperrungsschieber 10 nach einer Betätigung in seine Grundstellung gemäß den Figuren 2, 4, 5, 7 und 8 zurückkehrt.

Zur Erläuterung der Wirkungsweise der beschriebenen Einrichtung sei zunächst die Figur 2 betrachtet, die für die Betriebsstellung des Leistungsschalters 1 gilt. Wie man erkennt, befindet sich der Stift 37 des Riegels 33 in der Ausnehmung 26 der Kulisse 25. Ferner greift der Zapfen 34 des Riegels 33 in eine der Aussparungen 36 der Zahnscheibe 35 ein. Hierdurch ist die Gewindespindel 5 gegen Drehung gesperrt. Der Hilfshebel 45 liegt mit seiner Arbeitsfläche 48 an der rückwärtigen Abwinklung 55 des Entsperrungsschiebers 10 an. Ferner ist der Meldeschalter 63 durch Beaufschlagung seines Betätigungsorgans 66 durch die Anschlagfläche 62 des Steuerhebels 40 betätigt. Hieraus ist eine der Betriebsstellung des Leistungsschalters entsprechendes elektrisches Meldesignal zu gewinnen. Soll der Leistungsschalter 2 ausgehend von der Betriebsstellung in die Teststellung verfahren werden, so ist zunächst der Entsperrungsschieber 10 mittels der Abwinklung 54 zu betätigen. Er gelangt hierbei entgegen der Wirkung der Rückstellfeder 70 in die Stellung gemäß der Figur 3, wobei der Hilfshebel 45 um sein Schwenklager 50 geschwenkt wird und die Arbeitsfläche 48 am Ende des Schenkels 46 seitlich an dem Entsperrungsschieber 10 abgleitet. Somit liegen das Ende des Schenkels 46 und die Abwinklung 55 des Entsperrungsschiebers 10 unter der Wirkung der Rückstellfeder 67 aneinander an und blockieren sich gegenseitig. Die in der Figur 3 gezeigte Stellung der Teile bleibt somit zunächst durch Selbsthemmung aufrechterhalten.

Die durch Betätigung des Entsperrungsschiebers 10 bewirkte Schwenkung des Hilfshebels 45 ist mit einer Schwenkung des Steuerhebels 40 um seinen Lagerbolzen 42 verbunden. Hierdurch wird einerseits der Riegel 33 aufgrund seiner Verbindung mit dem Steuerhebel 40 durch den Stift 37 in die in der Figur 11 gezeigte Stellung verschoben, während andererseits die Anschlagfläche 62 von dem Betätigungsorgan 66 des Meldeschalters 63 abgehoben wird und dieser in seine Ruhestellung zurückkehrt. Hiermit ist ein Meldesignal über die Entsperrung der Verriegelung des Leistungsschalters verbunden.

Wie die Figur 3 zeigt, ist der Stift 37 des Riegels 33 durch die Schwenkung des Steuerhebels 40 in den Anfangsbereich der Steuerkurve 31 zwischen den Ausnehmungen 26 und 27 der Kulisse 25 gehoben. Wird nun die Gewindespindel 5 mittels eines geeigneten Werkzeuges gedreht, so wird hierdurch die Traverse in Richtung der Vorderkante der Bodenplatte 3 verschoben und der Leistungsschalter 2 dementsprechend mitgenommen. Zugleich wird die Auslenkung des Steuerhebels 40 gegenüber der Stellung gemäß der Figur 3 durch die Steuerkurve 31 weiter vergrößert, wodurch der Hilfshebel gleichfalls stärker geschwenkt und von dem Entsperrungsschieber 10 abgehoben wird. Dieser kehrt infolgedessen unter der Wirkung der Rückstellfeder 70 in seine Grundstellung zurück, wie dies die Figur 4 zeigt. Entlang dem abfallenden Teil der Dachschräge der Steuerkurve 31 gelangt der Führungsstift 37 bei weiterer Drehung der Gewindespindel 5 in die Ausnehmung 27 der Kulisse 25, wobei die ursprüngliche Ausrichtung des Steuerhebels 40 wieder hergestellt wird. Jedoch ist der Steuerhebel 40 nun in seiner Längsrichtung soweit verschoben, daß seine Anschlagfläche 62 nun mit dem Betätigungsorgan 66 des Meldeschalters 64 in Berührung steht und diesen Meldeschalters betätigt. Auch der Hilfshebel 45 steht nun wieder in seiner Grundstellung, in der die Arbeitsfläche 48 an der Abwinkelung 55 des Entsperrungsschiebers 10 anliegt.

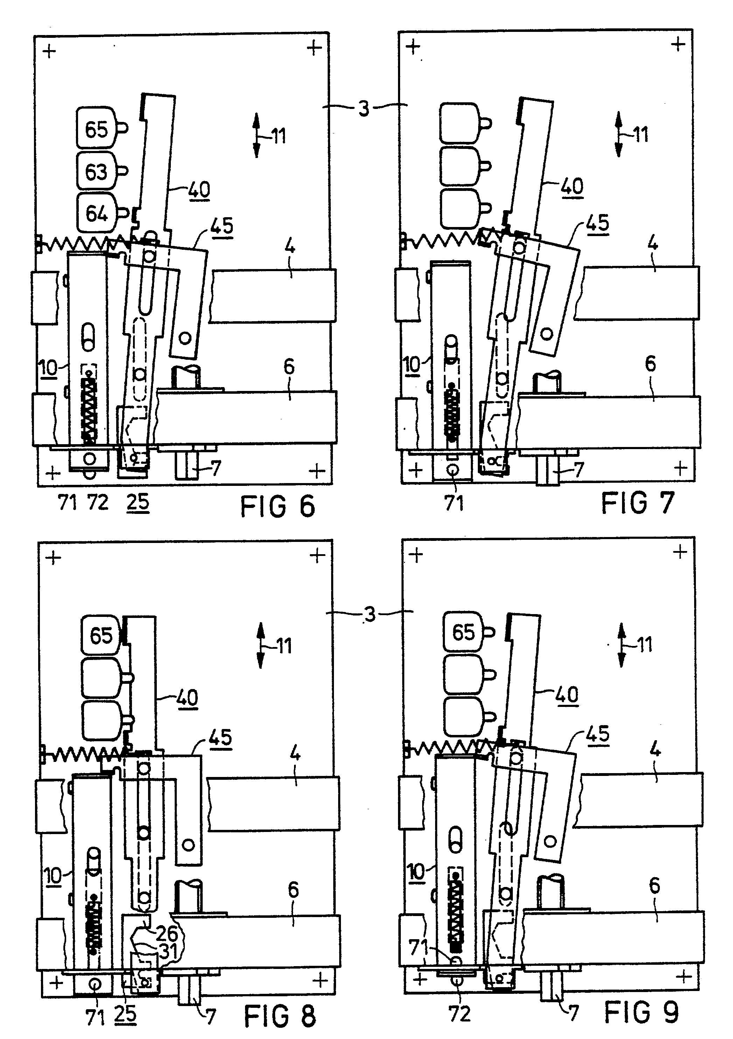

Vor einer weiteren Verschiebung des Leistungsschalters 2 aus der Teststellung gemäß der Figur 5 in die Trennstellung ist erneut der Entsperrungsschieber 10 zu betätigen. Dabei gelangen gemäß der Figur 6 der Entsperrungsschieber 10 und der Hilfshebel 45 in der schon beschriebenen Weise in den Zustand der Selbsthemmung, wobei wiederum der Steuerhebel 40 geschwenkt und seine Anschlagfläche 62 von dem Meldeschalter 64 abgehoben ist. Ferner gelangt der Führungsstift 37 des Riegels 33 in den Bereich der Steuerkurve 32.

Da auch diese Steuerkurve die Gestalt einer Dachschräge hat, führt eine weitere Verschiebung der Traverse 6 mittels der Gewindespindel 5 zu einer Zwischenstellung gemäß der Figur 7, in der der Steuerhebel 40 stärker geschwenkt und der Hilfshebel 45 aufgrund der Verbindung zwischen dem Steuerhebel 40 und dem Hilfshebel 45 durch den Gelenkstift 44 von dem Entsperrungsschieber 51 abgehoben ist. Dieser kehrt wiederum in die Ruhestellung zurück (Figuren 7 und 10). Anschließend gelangt bei weiterer Drehung der Gewindespindel 5 der Führungsstift 37 des Riegels 33 in die vordere Ausnehmung 30, wobei der Steuerhebel 40 um das gleiche Maß mitgenommen wird und seine Anschlagfläche 61 den Meldeschalter 65 beaufschlagt. Die Anschlagfläche 62 steht dagegen mit keinem der Meldeschalter in Berührung, da ihr Abstand von der Anschlagfläche 61 größer als der Abstand der außenliegenden Betätigungsorgane 66 der Meldeschalter bemessen ist. Die beschriebenen Vorgänge sind sinngemäß auch in umgekehrter Richtung oder mit wechselnder Richtung durchführbar. Dabei ist stets zunächst der Entsperrungsschieber 10 zu betätigen, um die Gewindespindel 5 zur Drehung frei zu geben.

Zur Sicherung gegen eine unbefugte Bedienung der Einrichtung ist in dem bedienungsseitigen Endteil 51 des Entsperrungsschieber 10 eine Öffnung 71 angebracht. Hiermit korrespondiert eine weitere Öffnung 72 in der Bodenplatte 3 des Einschubrahmens 1, wenn sich der Entsperrungsschieber 10 in seiner Grundstellung gemäß den Figuren 2, 4, 5, 7 und 8 befindet. Wird durch beide Öffnungen der Schloßbügel eines Vorhängeschlosses hindurchgeführt, so ist der Leistungsschalter 2 in jeder der Hauptstellungen gegen Verschiebung zu sperren.

## Patentansprüche

1. Einrichtung zur Verriegelung eines in einem Einschubrahmen (1) verfahrbar angeordneten Schaltgerätes (2) in mehreren Stellungen, insbesondere einer Betriebsstellung, einer Teststellung sowie einer Trennstellung, wobei eine mit diesen Stellungen entsprechenden Ausnehmungen (26, 27, 30) versehene Kulisse (25) mit einem zur Freigabe der Verschiebung des Schaltgerätes (2) betätigbaren Sperrglied (33) zusammenwirkt, dadurch gekennzeichnet, daß die Kulisse (25) in einer Bodenplatte (3) des Einschubrahmens (1) angeordnet ist und daß das Sperrglied als quer zur Richtung (11) des Fahrweges verschiebbar geführter, an einer zum Verfahren des Schaltgerätes (2) dienenden Traverse (6) angebrachter Riegel (33) ausgebildet ist.

2. Einrichtung nach Anspruch 1, dadurch gekennzeichnet, daß an einem in die Kulisse (25) eingreifenden Führungsstift (37) des Riegels (33) ein Steuerhebel (40) angelenkt ist, der um ein in einer ortsfesten Führungsbahn (41) verschiebbares Gelenk (42) durch einen Entsperrungsschieber (10) sowie durch einen mit diesem zusammenwirkenden Hilfshebel (45) in eine Entriegelunsstellung schwenkbar ist.

3. Einrichtung nach Anspruch 2, dadurch gekennzeichnet, daß der Steuerhebel (40), der Hilfshebel (45) und der Entsperrungsschieber (10) als im wesentlichen ebene, an der Bodenplatte (3) des Einschubrahmens (1) angeordnete und parallel zu dieser bewegbare Blechteile ausgebildet sind, wobei die Führungsbahn für den Steuerhebel (40) durch ein Langloch (41) in der Bodenplatte (3) gebildet ist.

4. Einrichtung nach Anspruch 2, dadurch gekennzeichnet, daß der Hilfshebel (45) als Winkelhebel mit zwei Schenkeln (46, 47) ausgebildet ist, von denen der eine (47) nahe seinem Ende ein Schwenklager (50) aufweist, während der andere Schenkel (46) eine mit dem Entsperrungsschieber (10) zusammenwirkende Arbeitsfläche (48) aufweist und einen in ein Langloch (43) des Steuerhebels (40) eingreifenden Zapfen (44) besitzt.

5. Einrichtung nach Anspruch 2, dadurch gekennzeichnet, daß der Hilfshebel (40) und der Entsperrungsschieber (10) jeweils durch eine Feder (67, 70) im Sinne der Rückstellung des Riegels (33) in die Sperrstellung bzw. des Entsperrungsschiebers (10) in ihre Ruhestellung vorgespannt sind.

6. Einrichtung nach Anspruch 2, dadurch gekennzeichnet, daß die Kulisse (25) zwischen den Aussparungen für die unterschiedlichen Stellungen des Schaltgerätes (2) jeweils eine etwa dachförmige Steuerkurve (31, 32) besitzt, wobei die Dachschrägen zur weiteren Schwenkung des Steuerhebels (40) im Sinne der Freigabe des Entsperrungsschiebers (10) angeordnet sind.

7. Einrichtung nach Anspruch 2, dadurch gekennzeichnet, daß der Steuerhebel (40) einen Fortsatz (60) mit zur Beaufschlagung von Meldeschaltern (63, 64, 65) dienenden Anschlagflächen (61, 62) besitzt.

8. Einrichtung nach Anspruch 7, dadurch gekennzeichnet, daß die Meldeschalter (63, 64, 65) auf der Bodenplatte (3) des Einschubrahmens (1) in der Richtung des Fahrweges (11) hintereinanderliegend angeordnet sind.

9. Einrichtung nach Anspruch 8, dadurch gekennzeichnet, daß drei Meldeschalter (63, 64, 65) bzw. drei Sätze übereinander angeordneter Meldeschalter vorgesehen sind und daß der Fortsatz (60) des Steuerhebels (40) zwei Anschlagflächen (61, 62) besitzt, deren Abstand größer als der Fahrweg des Schaltgerätes (2) zwischen der Betriebsstellung und der Trennstellung ist.

10. Einrichtung nach Anspruch 1, dadurch gekennzeichnet, daß die Traverse (6) nahe der Frontseite des Schaltgerätes (2) in dem Einschubrahmen (1) angeordnet ist und als bewegliches Widerlager einer zur Verschiebung des Schaltgerätes (2) dienenden Gewindespindel (5) ausgebildet ist, die eine mit einem Sperrzapfen (34) des Riegels (33) zusammenwirkende Zahnscheibe (35) trägt.

11. Einrichtung nach Anspruch 2 oder einem der folgenden Ansprüche, dadurch gekennzeichnet, daß der Entsperrungschieber (10) an seinem bedienungsseitigen Endteil (51) eine Öffnung (71) besitzt und daß in der Bodenplatte (3) eine weitere, mit der Öffnung (71) des Entsperrungsschiebers (10) in dessen Ruhestellung korrespondierende Öffnung (72) vorgesehen ist.

## Revendications

1. Dispositif pour verrouiller un appareil de coupure (2) disposé de manière à être déplaçable dans un cadre formant tiroir (1), dans plusieurs positions, notamment une position de service, une position d'essai ainsi qu'une position de séparation ou de coupure, et dans lequel une coulisse (25) comportant des évidements (26, 27, 30) correspondant à ces positions coopère avec un organe de blocage (33) pouvant être actionné de manière à libérer le déplacement de l'appareil de coupure (2), caractérisé par le fait que la coulisse (25) est disposée dans une plaque de fond (3) du cadre formant tiroir (1) et que l'organe de blocage est agencé sous la forme d'un verrou (33) guidé de manière à être déplaçable transversalement dans la direction (11) du trajet de déplacement et installé sur une traverse (6) utilisée pour déplacer l'appareil de coupure (2).

2. Dispositif suivant la revendication 1, caractérisé par le fait que sur une tige de guidage (35), qui s'engage dans la coulisse (25), du verrou (3) est articulé un levier de commande (40), qui peut venir dans une position verrouillée, par pivotement autour d'une articulation (42) déplaçable dans une glissière fixe (41), au moyen d'un poussoir de déblocage (10) ainsi qu'au moyen d'un levier auxiliaire (45) coopérant avec ce poussoir.

3. Dispositif suivant la revendication 2, caractérisé par le fait que le levier de commande (40), le levier auxiliaire (45) et le poussoir de déblocage (10) sont agencés sous la forme d'éléments en tôle essentiellement plats, disposés sur la plaque de fond (3) du cadre formant tiroir (1) et déplaçables parallèlement à cette plaque, la glissière pour le levier de commande (40) étant formée par un trou allongé (41) ménagé dans la plaque de fond (3).

4. Dispositif suivant la revendication 2, caractérisé par le fait que le levier auxiliaire (45) est réalisé sous la forme d'un levier coudé comportant deux branches (46, 47), dont l'une (47) comporte, à proximité de son extrémité, un tourillon (50), tandis que l'autre branche (46) comporte une surface de travail (48), qui coopère avec le poussoir de déblocage (10) et possède un téton (44), qui s'engage dans un trou allongé (43) du levier de commande (40).

5. Dispositif suivant la revendication 2, caractérisé par le fait que le levier auxiliaire (40) et le poussoir de déblocage (10) sont précontraints respectivement par un ressort (67, 70) dans le sens d'un rappel du verrou (33) dans la position de blocage ou du poussoir de déblocage (10) dans sa position de repos.

6. Dispositif suivant la revendication 2, caractérisé par le fait que la coulisse (25) possède, entre les évidements pour les différentes positions de l'appareil de coupure (2), respectivement une came de commande (31, 32) par exemple en forme de toit, dont les pans obliques sont disposés de manière à permettre la poursuite du pivotement du levier de commande (40) dans le sens de la libération du poussoir de déblocage (10).

7. Dispositiv suivant la revendication 2, caractérisé par le fait que le levier de commande (40) possède un prolongement (60) comportant des surfaces de butée (61, 62) servant à charger des interrupteurs de signalisation (63, 64, 65).

8. Dispositif suivant la revendication 7, caractérisé par le fait que les interrupteurs de signalisation (63, 64, 65) sont disposés sur la plaque de fond (3) du cadre formant tiroir (1), les uns derrière les autres dans la direction du trajet de déplacement (11).

9. Dispositif suivant la revendication 8, caractérisé par le fait qu'il est prévu trois interrupteurs de signalisation (63, 64, 65) ou trois ensembles d'interrupteurs de signalisation superposés, et que le prolongement (60) du levier de commande (40) possède deux surfaces de butée (61, 62), dont la distance est supérieure au trajet de déplacement de l'appareil de coupure (2) entre la position de service et la position de séparation.

10. Dispositif suivant la revendication 1, caractérisé par le fait que la traverse (6) est disposée à proximité de la face avant de l'appareil de coupure (2) dans le cadre formant tiroir (1) et est agencée sous la forme d'une butée mobile d'une broche filetée (5), qui est utilisée pour déplacer l'appareil de coupure (2) et porte un disque denté (35), qui coopère avec un téton de blocage (34) du verrou (33).

11. Dispositif suivant la revendication 2 ou l'une des revendications suivantes, caractérisé par le fait que le poussoir de déblocage (10) possède, sur sa partie d'extrémité (51) côté commande, une ouverture (71) et qu'il est prévu dans la plaque de fond (3), une autre ouverture (72) qui est en correspondance avec l'ouverture (71) du poussoir de déblocage (10), lorsque ce dernier est dans sa position de repos.

**Claims**

1. A device for interlocking a switching device (2), arranged in a transportable manner in a slide-in frame (1), in several positions, particularly an operating position, a test position as well as a disconnected position, wherein a crank (25) provided with recesses (26, 27, 30) corresponding with these positions cooperates with an actuatable blocking member (33) for releasing the displacement of the switching device (2), characterised in that the crank (25) is arranged in a base plate (3) of the slide-in frame (1) and in that the blocking member is constructed as a locking bar (33) attached to a cross-member (6) serving to transport the switching device (2), said locking bar being guided in a displaceable manner transverse to the direction (11) of the travel path.

2. A device according to claim 1, characterised in that a control lever (40) is hinged on a guide pin (37) of the locking bar (33) engaging in the crank (25), which lever is pivoted around a joint (42) displaceable in a stationary guideway (41), by an unlatching slide (10) as well as by an auxiliary lever (45) cooperating with this, into a released position.

3. A device according to claim 2, characterised in that the control lever (40), the auxiliary lever (45) and the unlatching slide (10) are constructed as substantially plane mobile sheet metal parts arranged on the base plate (3) of the slide-in frame (1) and parallel to this, wherein the guideway for the control lever (40) is formed by an oblong hole (41) in the base plate (3).

4. A device according to claim 2, characterised in that the auxiliary lever (45) is constructed as an angle lever with two flanks (46, 47) one (47) of which has, close to its end, a pivoted bearing (50), whilst the other flank (46) has a working face (48) cooperating with the unlatching slide (10), and has a pin (44) engaging in an oblong hole (43) of the control lever (40).

5. A device according to claim 2, characterised in that the auxiliary lever (40) and the unlatching slide (10) are in each case biased by a spring (67, 70), for the purpose resetting the locking bar (33) into the locked position or the unlatching slide (10) into its resting position.

6. A device according to claim 2, characterised in that the crank (25) between the cutouts for the varying positions of the switching device (2) has in each case an approximately roof-shaped cam (31, 32), wherein the tilts for further pivoting of the control lever (40) are arranged for the purpose of a release of the unlatching slide (10).

7. A device according to claim 2, characterised in that the control lever (40) has an extension (60) with abutment faces (61, 62) serving to act on indicator switches (63, 64, 65).

8. A device according to claim 7, characterised in that the indicator switches (63, 64, 65) are arranged lying behind each other on the base plate (3) of the slide-in frame (1) in the direction of the travel path (11).

9. A device according to claim 8, characterised in that three indicator switches (63, 64, 65) or three sets of indicator switches, arranged above each other, are provided and in that the extension (60) of the control lever (40) has two abutment faces (61, 62), the distance of which is greater than the travel path of the switching device (2) between the operating position and the disconnected position.

10. A device according to claim 1, characterised in that the cross-member (6) is arranged close to the front side of the switching device (2) in the slide-in frame (1) and is constructed as a mobile abutment of a threaded spindle (5) serving to displace the switching device (2), which carries a toothed disc (35) cooperating with a blocking plug (34) of the locking bar (33).

11. A device according to claim 2 or one of the following claims, characterised in that the unlatching slide (10) has on its operating-side end part (51) an opening (71) and in that a further opening (72) corresponding with the opening (71) of the unlatching slide (10) in its resting position is provided in the base plate (3).

FIG 1

FIG 10

FIG 11

FIG 2

FIG 3

FIG 4

FIG 5

FIG 6

FIG 7

FIG 8

FIG 9